(19)

Europäisches
Patentamt
European
Patent Office
Office européen
des brevets

(11) **EP 2 270 578 A1**

(12) **EUROPEAN PATENT APPLICATION**

<table>
<tr><td>(43) Date of publication:<br>**05.01.2011 Bulletin 2011/01**</td><td>(51) Int Cl.:<br>***G02C 7/06*** *(2006.01)*     ***G02C 7/02*** *(2006.01)*</td></tr>
<tr><td colspan="2">(21) Application number: **09305632.3**</td></tr>
<tr><td colspan="2">(22) Date of filing: **30.06.2009**</td></tr>
</table>

<table>
<tr><td>(84) Designated Contracting States:<br>**AT BE BG CH CY CZ DE DK EE ES FI FR GB GR<br>HR HU IE IS IT LI LT LU LV MC MK MT NL NO PL<br>PT RO SE SI SK TR**<br>Designated Extension States:<br>**AL BA RS**<br><br>(71) Applicant: **Essilor International<br>(Compagnie Générale D'Optique)<br>94220 Charenton le Pont (FR)**</td><td>(72) Inventors:<br>• **Allione, Pascal<br>94220 Charenton-le-Pont (FR)**<br>• **Calixte, Laurent<br>94220 Charenton-le-Pont (FR)**<br>• **Guilloux, Cyril<br>94220 Charenton-le-Pont (FR)**<br><br>(74) Representative: **Cabinet Plasseraud<br>52, rue de la Victoire<br>75440 Paris Cedex 09 (FR)**</td></tr>
</table>

(54) **Method of and apparatus for designing an optical lens**

(57)    The present invention relates to a method of and an apparatus for designing an optical lens surface, the method comprising the steps of providing a reference surface $S_{ref}$, the reference surface $S_{ref}$ being defined by a plurality of surface points $P_i$ each surface point $P_i$ having a mean sphere Sph $(P_i)$ and a cylinder $Cyl(P_i)$; providing at least one modifying surface layer $SL_{mod}(\xi 1, ...., \xi N, x,y)$ the modifying surface layer $SL_{mod}$ being determined as a function of N adjustment parameters $\xi_1$, 4..., $\xi_N$; wherein N≥1 and the N adjustment parameters $\xi_1, \xi_4, ..., \xi_N$ are selected according to the desired optical properties of the optical target; combining the modifying surface layer $SL_{mod}$ with the reference surface $S_{ref}$ to obtain a target optical surface $S_{tar}(x,y)$ according to the expression:

$$S_{tar}(x,y) = S_{ref}(x,y) + SL_{mod} (\xi_1, ..., \xi_N, x,y);$$

such that the value of surface parameter of at least one surface point $P_i$ at a first region of the reference surface $S_{ref}$ is modified without modifying a surface parameter of at least one surface point $P_i$ at a second region of the reference surface $S_{ref}$, distanced from the first region.

**FIG. 1A**

Printed by Jouve, 75001 PARIS (FR)

EP 2 270 578 A1

**FIG. 1B**

**FIG. 1C**

**Description**

The present invention relates to a method of and an apparatus for designing a surface of an optical lens. The invention further relates to a method of and an apparatus for manufacturing an optical lens according to the surface design determined by the method of the invention.

Multifocal ophthalmic lenses are well known and in practice often comprise an aspherical face, and a face, which is spherical or toric, machined to match the lens to the wearer's prescription. It is therefore usual to characterize a multifocal lens by the surface parameters of its aspherical surface. An aspherical surface is generally defined by the height or altitude of the points thereon. Parameters are also used consisting of maximum and minimum curvature at each point, or more frequently their half sum and their difference which are commonly referred to as mean sphere and cylinder.

The mean sphere *Sph* is defined by the expression:

$$Sph = \frac{n-1}{2}\left(\frac{1}{R_1} + \frac{1}{R_2}\right) \qquad (1)$$

The cylinder Cyl is defined by the expression:

$$Cyl = (n-1)\left|\frac{1}{R_1} - \frac{1}{R_2}\right| \qquad (2)$$

where $R_1$ and $R_2$ are the minimum and maximum radii of curvature, expressed in meters, and n is the refractive index of the lens material.

Among such multifocal lenses it is possible to distinguish lenses called progressive lenses, adapted for vision at all distances, lenses more specifically dedicated to near vision and to intermediate vision and lenses dedicated to far vision and to intermediate vision. Generally, the invention is applicable to any lens having a power variation.

Progressive ophthalmic lenses usually comprise a far vision region, a near vision region, an intermediate vision region and a main meridian line of progression passing through these three regions.

The main meridian line of progression is a line which is representative of the intersection of the aspherical surface of a lens with the gaze of an average wearer when he or she looks straight ahead at objects in a meridian plane, at different distances. This line is often used in the definition of a progressive surface, as an optimization parameter.

The addition value, of an progressive ophthalmic lens corresponds to the variation in mean sphere or power between a point in the distance vision portion and a point in the near vision portion, these points being respectively called the distance vision power control point and the near vision power control point, and which represent the points where the line of sight intersects the lens surface for infinite vision and for reading vision. These two reference points are usually located on the main meridian line of progression. A point, often referred to as a fitting cross FC or mounting center MC is commonly marked on ophthalmic lenses and used by the optician for mounting lenses in a frame.

For multifocal lenses, the power in the various far, intermediate and near vision regions, independently of their position on the lens, is determined by the prescription for compensating a visual defect of the wearer. The prescription may comprise just a power value for near vision or a power value for far vision and an addition, and possibly an astigmatism value with its axis and a prism.

Multifocal ophthalmic lenses regardless of their type, inevitably suffer from optical aberrations (astigmatism, distortion, prismatic deviations, etc.) which have a negative effect on visual comfort both under static and dynamic vision conditions.

In a common method for producing progressive multifocal lenses, a semi-finished lens blank having suitable optical characteristics is selected based on a prescription. Typically the semi-finished progressive lens blank comprises a front progressive multifocal surface and a back spherical surface. The back surface of the semi-finished lens blank is then machined and polished to match the prescription. Unfortunately, current semi-finished progressive lens blanks are relatively expensive.

An alternative method for producing multifocal progressive lenses uses less expensive single vision semi-finished lens blanks having a front spherical surface and a back spherical surface. Based on the prescription, a single vision semi-finished lens blank having a suitable base curve is selected. A base curve corresponds to the curvature of the front surface of the lens, generally measured at the distance vision power control point and where the higher the base curve the more curved is the lens. A progressive surface design is then computed in accordance with the prescription, and the back surface of the lens blank is machined and polished to produce the desired progressive surface. Although less expensive, this method for producing multifocal progressive lenses is relatively time consuming, partly due to the computational complexity of computing the progressive surface for each prescription.

The surface of an optical lens may be adjusted to a particular desired optical design in a number of ways. Current techniques for controlling the cylinder and the axis of a progressive surface at one or more surface points typically employ a surface optimisation method with equality constraints which may relate, for example, to the cylinders at the far vision and near vision control points and in which an optical function, often referred to as a merit function is constructed from the sphere and cylinder reference maps. In these techniques a cylinder and or a sphere is imposed at a certain number of surface points while trying to preserve as much as possible the overall surface design. Generally to construct a merit function to be minimised by means of these tools a reference progressive surface is used as a starting point. The constraints to be respected are then added. An optimisation process is then implemented on the merit function and on the constraints by varying several hundreds of surface description coefficients.

The use of such methods can however be time consuming in terms of the calculation algorithms used, and thus cannot be easily integrated into the calculation process of complex lens without considerably increasing the calculation time. Moreover, often the optical design parameters are not truly respected. This is due to the optimisation technique being dependent on a number of unknowns and the optical merit function being made up of several thousand target parameters. In order to avoid these optimisation phases during calculation of a final lens, a very significant number of semi finished surfaces are pre-calculated and stored in a database.

Today with the increase in product specification requirements and the complexity of surface manipulation there is an increasing need to control the cylinder and the axis of a progressive surface at several surface points. For example:

■ during the design of progressive surfaces it is desirable to be able to impose a zero cylinder value in the near vision zone and/or the far vision zone;

■ for commercial reasons and processing requirements (for example measuring techniques) it is sometimes desirable to be able to impose a zero cylinder value at a point in the near vision zone for aspherical surfaces without changing the far vision cylinder of the original surface or vice versa so that modification of the general allure of the mean sphere and cylinder maps defining the design is minimised. This process is sometimes referred to as buffering and can be applied during the design of a progressive semi-finished blank;

■ generally there is a need to control the cylinder value in the far vision zone and in the near vision zone each time significant surface transformations are carried out, for example when changes in the near vision inset, surface composition and meridian changes are performed

■ for future products having different astigmatism values it is also desirable to be able to control the cylinder at a point of the far vision region and the cylinder at a point of the near vision region independently of one another

If a progressive ophthalmic lens is considered in its environment (ergorama) of normal use positioned in front of the wearer taking into account certain wearing parameters such as pantoscopic angle, curving contour, eye-lens distance, and according to the wearer's prescription, certain undesirable optical aberrations can appear in viewing directions for which the surface of the lens does not have any or very little surface aberration. More specifically the two surfaces of the lens may have a zero or practically zero cylinder value on a zone or at a point and the optical analysis of the same lens may present in this zone an undesirable level of astigmatism. Such aberrations do not necessarily result from a defect of the surface but are often the result of oblique effects due to the incidence of the rays and the thickness of the lens in different viewing directions through the optical lens.

A desire in an optical context is therefore to cancel for a gaze direction or to minimise in a zone, the resulting astigmatism generated by surface defects of the lens, as well as by oblique effects, without changing or by modifying as little as possible the optical design and more particularly the optical power map of the lens.

In the context of optical parameters there are generally two methods for minimising oblique effects.

A first method consists in optimising the surface of one of the two faces of the lens in such a way that it optically generates the least amount of optical aberration in the considered zones. The designer works the surface by trial and error looking for an optimised surface geometry which will preserve certain design characteristics such as field/gradient compromise, progression length etc, while controlling the level of optical aberrations linked to oblique effects.

A second method consists in optically optimising the lens by varying one of the two faces while targeting an optical function defined by the designer which presents the least number of aberrations in the considered zones for the specific prescription. Again the designer must work by trial and error by looking for an optical target function attainable by the optimised lens which satisfies at the same time certain design characteristics such as field/gradient compromise, progression length etc. while controlling the level of optical aberrations linked to oblique effects.

Such aspherical optimisation can be calculated for:

■ a reference prescription and then extended to a certain part of the prescription range (for example by calculating an aspherisation per base of semi-finished blanks with a reference prescription per base. However the benefits are not optimal for all prescriptions;

■ each prescription in a customised manner by multiplying the number of semi-finished blanks or by machining the lens according to the prescription

In order to cancel a resulting astigmatism of a lens for a particular gaze direction it is possible to calculate and add a surface layer, purely cylindrical to one of the two surfaces of the optical lens.

The aforementioned methods of aspherisation and atorisation suffer the drawback that for a progressive lens they are not optimised in each viewing direction mainly due to the differences in power and proximity of objects in the different zones of vision of the lens, in particular between the near vision zone and the far vision zone.

Moreover, the aforementioned methods suffer the drawback that they are cumbersome to implement due to the oblique effects depending on different parameters, and in particular on the prescription. This means that it is necessary to provide a different method for each prescription which in practice is unfeasible.

In view of the foregoing it would be desirable to reduce the complexity of the calculation design and improve the reliability of the calculations in the design of a surface of an optical lens.

Accordingly, in its most general form the present invention comprises adding to a pre-calculated reference progressive surface, a modifying surface layer. Certain parameters of the modifying surface layer are adjusted in order to satisfy the desired constraints. Accordingly, instead of solving an optimisation problem under equality constraints with several hundreds of unknowns, by virtue of a well chosen modifying surface layer, a system of equations can be solved with only several unknowns. The modifying surface layer may be dependant or it can be a defined as a function of the reference surface.

According to a first aspect of the invention, there is provided a method of designing an optical lens surface, the method comprising the steps of providing a reference surface $S_{ref}$, the reference surface $S_{ref}$ being defined by a plurality of surface points $P_i$ each surface point $P_i$ having a mean sphere Sph $(P_i)$ and a cylinder $Cyl(P_i)$; providing at least one modifying surface layer $SL_{mod}(\xi_1, ...., \xi_N, x,y)$ the modifying surface layer $SL_{mod}$ being determined as a function of N adjustment parameters $\xi_1, \xi..., \xi_{N;}$ wherein $N \geq 1$ and the N adjustment parameters $\xi_1, \xi_4,..., \xi_N$ are selected according to the desired optical properties of the optical target; combining the modifying surface layer $SL_{mod}$ with the reference surface $S_{ref}$ to obtain a target optical surface $S_{tar}(x,y)$ according to the expression: $S_{tar}(x,y) = S_{ref}(x,y) + SL_{mod}(\xi_1, ..., \xi_N, x,y)$; such that the value of a lens parameter of at least one surface point $P_i$ at a first region of the reference surface $S_{ref}$ is modified without modifying a lens parameter of at least one surface point $P_i$ at a second region of the reference surface $S_{ref}$, distanced from the first region.

The method according to a first aspect of the invention enables the calculation time of the final target surface of an optical lens to be significantly decreased, from a duration of over several minutes to the order of seconds. Although the method may employ the use of an optimisation method with equality constraints in order to define the reference surface layers, these surface layers are independent of the target surface of the final optical product and are of a limited number. For example, 4 surface layers may be sufficient for an entire product range.

Moreover, the method according to the first aspect of the invention enables the reference design to be respected and the level of astigmatism to be minimised. From the reference surface design, the method enables surface equations to be obtained for a set of semi-finished blanks; or attainable optical targets to be generated for optical optimisation of a manufactured lens according, for example to a prescription.

Employing the method according to the first aspect of the invention enables resolution of a problem having a considerably reduced number of unknown variables as opposed to resolving a problem including several hundreds of unknown variables necessitating resolution by complex optimisation. The solution of aspects of the invention is thus more economical in terms of calculating resources. Depending on the case in question it would suffice to solve a system of linear or non-linear equations, or to minimise a merit function.

According to a second aspect of the invention there is provided a method of manufacturing an optical lens surface comprising the steps of designing a target optical surface $S_{tar}(x,y)$ of the optical lens as described above, and further comprising the step of manufacturing the surface according to the target optical surface $S_{tar}(x,y)$.

Further features of embodiments of the invention are set out below:

The optical lens may be a progressive or digressive optical lens and wherein the first region corresponds to one of a far vision zone and a near vision zone of the reference surface $S_{ref}$, and the second region corresponds to the other of the near vision zone and the far vision zone of the reference surface $S_{ref}$.

Modifying the lens parameter may include modifying at least one of the mean sphere Sph $(P_i)$, the cylinder Cyl $(P_i)$, the cylinder axis $Ax(P_i)$, the optical power $OP((P_i)$ and the astigmatism value $Ast(P_i)$, at the at least one surface point $P_i$.

The N adjustment parameters $\xi_1, ..., \xi_N$ may be selected according respectively to N optical constraints imposed by the desired optical properties of the target optical surface $S_{tar}$.

Alternatively the N adjustment parameters $\xi_1, ..., \xi_N$ may be selected to minimise a surface or optical merit function around a surface point $P_i$ The modifying surface layer $SL_{mod}$ may be determined according to at least a first surface S1 and a second surface S2 as a function of at least 2 adjustment parameters $\xi_1, \xi_2$ and is given by the expression:

$$SL_{mod} (\xi_1, \xi_2, x, y) = \xi_1(S1(x,y)\cos(2\xi_2) + S2(x,y)\sin(2\xi_2))$$

The modifying surface layer $SL_{mod}$ may be determined according to a first surface S1 as a function of at least 2 adjustment parameters $\xi_1, \xi_2$ and is given by the expression:

$$SL_{mod =}(\xi_1, \xi_2, x, y) = \xi_1 Rotation\_z(\xi_2, S1(x,y))$$

wherein $Rotation\_z(\xi_2, S1(x,y))$ is a rotation function representing the rotation of the first surface S1 about an axis z passing through a surface point of the plane (0x,y).

The modifying surface layer $SL_{mod}$ may be constituted of a plurality L of constitutive surface layers $S_{mod1}....S_{modL}$, where L>1 as a function of a plurality M of adjustment parameters $\xi_1, \xi_2, \xi_m..\xi_M$ and is given by the expression:

$$SL_{mod} (\xi_1..\xi_M, x, y) = SL_{mod1} (\xi_1, \xi_2, x, y) + SL_{modl} (\xi_m, \xi_M, x, y)$$

in which each constitutive surface layer $S_{mod1}$, controls at least one of a cylinder $Cyl(P_i)$, a mean sphere $Sph(P_i)$ an astigmatism value $Ast(P_i)$, of a respective control point $(P_i)$ of the reference surface $S_{ref}$.

For example, the modifying surface layer $SL_{mod}$ may be constituted of at least two constitutive surface layers $SL_{mod1}$ and $SL_{mod2}$ as a function of 4 adjustment parameters $\xi_1, \xi_2, \xi_3, \xi_4$ and is given by the expression:

$$SL_{mod} (\xi_1, \xi_2, \xi_3, \xi_4, x, y) = SL_{mod1} (\xi_1, \xi_2, x, y) + SL_{mod2} (\xi_3, \xi_4, x, y)$$

in which each consitutive surface layer $S_{mod1}$, $S_{mod2}$ controls, for example, a cylinder $Cyl(P_i)$ of a respective control point $(P_i)$ of the reference surface $S_{ref}$.

The modifying surface layer $SL_{mod}$ may be determined according to at least a first surface S1 and a second surface S2 as a function of at least 2 adjustment parameters $\xi_1, \xi_2$ and is given by the expression:

$$SL_{mod} (\xi_1, \xi_2, x, y) = \xi_1 S1(x,y) + \xi_2 S2(x,y)$$

The modifying surface layer $SL_{mod}(\xi_1, \xi_2, \xi_3, \xi_4,..., \xi_N, x, y)$ may be expressed as surface layer $SL_{mod} (\xi_1, x, y) = \xi_1 S1(x,y)$ to modify value of, for example, the sphere Sph at a point $P_0$ of the reference surface $S_{ref}$,

An optical constraint may comprise one or more of the following characteristics: a cylinder value $Cyl(P_i)$ a mean sphere value $Sph(P_i)$, a cylinder axial value, an optical power value, and an astigmatism value at a surface point Pi.

According to another aspect, the invention relates to a computer program product comprising one or more stored sequence of instructions accessible to a processor which, when executed by the processor, causes the processor to carry out the steps of a method according to the invention. The invention also relates to a computer readable medium carrying one or more sequences of instructions of the computer program product according to the invention.

Unless specifically stated otherwise, it will be appreciated that throughout the specification terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

In the context of the present invention, the following terms may be deemed to have meanings indicated herein below:

- optical axis of the progressive addition lens: direction perpendicular to the front face of a lens and passing through the optical center or the prism reference point (PRP) in the case of a progressive lens;
- near vision point-well known term in the art, an example of definition may be: the point of a surface of a progressive addition lens through which the sight of the wearer passes when said wearer is in a reading position.
- reading position - widely used by the person skilled in the art of vision correction and may be understood as a reading position where the object to be read is situated between 25 to 50 cm from the eye or more generally from spectacles plan of the reader
- far vision poin:t well known to the person skilled in the art, an example of definition may be: the point of a surface of a progressive addition lens through which the sight of the wearer passes when said wearer looks at infinity and where the values of the Sphere, cylinder and Axe correspond to the wearer's prescription for far vision.
- surface design widely used wording known from the man skilled in the art to designate the set of parameters allowing an optical function of a generic optical system to be designed; each ophthalmic lens manufacturer may have its own designs, particularly for aspherical lens and for progressive addition lenses.
- far vision zone: zone of the lens that surrounds the far vision point, and within which the local optical characteristics of optical power and of astigmatism of the lens are substantially identical to those at the far vision point;
- near vision zone: zone of the lens that surrounds the near vision point, and within which the local optical characteristics of optical power and of astigmatism of the lens are substantially identical to those of the near vision point;
- addition of a progressive addition lens: difference between the value of optical power of the lens at the near vision point and that at the far vision point;
- optical characteristics of a progressive addition lens: data on optical power, astigmatism, aberration, etc., relating to the modifications of a light beam that passes through the progressive addition lens;
- prescription: set of optical characteristics of optical power, of astigmatism and, where relevant, of addition, determined by an optician or the like in order to compensate for visual defects of an individual, for example by means of a lens positioned in front of his eye.
- astigmatism: term used to denote the data pair formed by an amplitude value and a value of angle. It is also sometimes used to denote the amplitude of the astigmatism only. The context allows those skilled in the art to understand which usage of the term is intended. Generally speaking, the prescription for a progressive addition lens comprises values of optical power and of astigmatism at the distance-vision point and, where appropriate, an addition value;
- surface characteristics of a progressive addition lens: geometrical data relating to one face of the lens, such as values of average sphere or of cylinder, for example;
- height: used to define a lens or a lens zone dimension corresponding to a vertical when the sight is horizontal;
- width: used to define a lens or a lens zone dimension corresponding to a horizontal when the sight is horizontal.

For purposes of the invention, by "progressive addition surface" or "progressive surface" is meant a continuous, aspheric surface having far and near vision zones and a zone of increasing dioptric power connecting the far and near vision zones.

By "ophthalmic lens" or "lens" is meant any ophthalmic lens including, without limitation, spectacle lenses, contact lenses, intraocular lenses and the like. Preferably, the lens of the invention is a spectacle lens.

Embodiments of the invention will now be described, by way of example only, and with reference to the following drawings in which:-

Figures 1A to 1C schematically show an example of an eye-lens arrangement;

Figure 2 is a flow chart of steps of a method of designing an optical lens according to embodiments of the invention;

Figure 3 is a profile of a surface constituting a surface modifying layer for designing an optical lens according to an embodiment of the invention;

Figure 4 is a spheres profile along the meridian progression line of a surface used for modifying a reference surface according to an embodiment of the invention;

Figure 5A is a profile of a surface constituting a surface modifying layer for modifying a reference surface according to an embodiment of the invention;

Figure 5B is a spheres profile along the meridian progression line of a surface used for modifying a reference surface according to the embodiment of Figure 4;

Figure 6A illustrates a spheres profile along the meridian progression line of a surface of an optical lens to be modified according to an embodiment of the invention;

Figure 6B is a surface map of the mean sphere value of the surface of Figure 6A;

Figure 6C is a surface map of a cylinder value of the surface of Figure 6A;

Figure 7A illustrates a spheres profile along the meridian progression line of a surface of an optical lens modified according to an embodiment of the invention;

Figure 7B is a surface map of the mean sphere value of the surface of Figure 7A;

Figure 7C is a surface map of a cylinder value of the surface of Figure 7A;

Figure 8A illustrates a spheres profile along the meridian progression line of a surface of an optical lens modified according to an embodiment of the invention;

Figure 8B is a surface map of the mean sphere value of the surface of Figure 8A;

Figure 8C is a surface map of a cylinder value of the surface of Figure 8A;

Figure 9A illustrates a powers profile along the meridian progression line of a surface of an optical lens to be modified according to an embodiment of the invention;

Figure 9B is a surface map of the power profile of the surface of Figure 9A;

Figure 9C is a surface map of astigmatism value of the surface of Figure 9A;

Figure 10A illustrates a powers profile along the meridian progression line of a surface of an optical lens modified according to a surface modifying method;

Figure 10B is a surface map of the power profile of the surface of Figure 10A;

Figure 10C is a surface map of astigmatism value of the surface of Figure 10A;

Figure 11A illustrates a powers profile along the meridian progression line of a surface of an optical lens modified according to a surface modifying method;

Figure 11B is a surface map of the power value of the surface of Figure 11A;

Figure 11C is a surface map of astigmatism value of the surface of Figure 11A;

Figure 12A illustrates a powers profile along the meridian progression line of a surface of an optical lens modified according to an embodiment of the invention;

Figure 12B is a surface map of the power value of the surface of Figure 12A;

Figure 12C is a surface map of astigmatism value of the surface of Figure 12A;

Figure 13A illustrates a powers profile along the meridian progression line of a surface of an optical lens modified according to an embodiment of the invention;

Figure 13B is a surface map of the power value of the surface of Figure 13A;

Figure 13C is a surface map of astigmatism value of the surface of Figure 13A:

Figure 14A illustrates a spheres profile along the meridian progression line of a surface of an optical lens to be modified according to an embodiment of the invention;

Figure 14B is a surface map of the mean sphere value of the surface of Figure 14A; and

Figure 14C is a surface map of a cylinder value of the surface of Figure 14A.

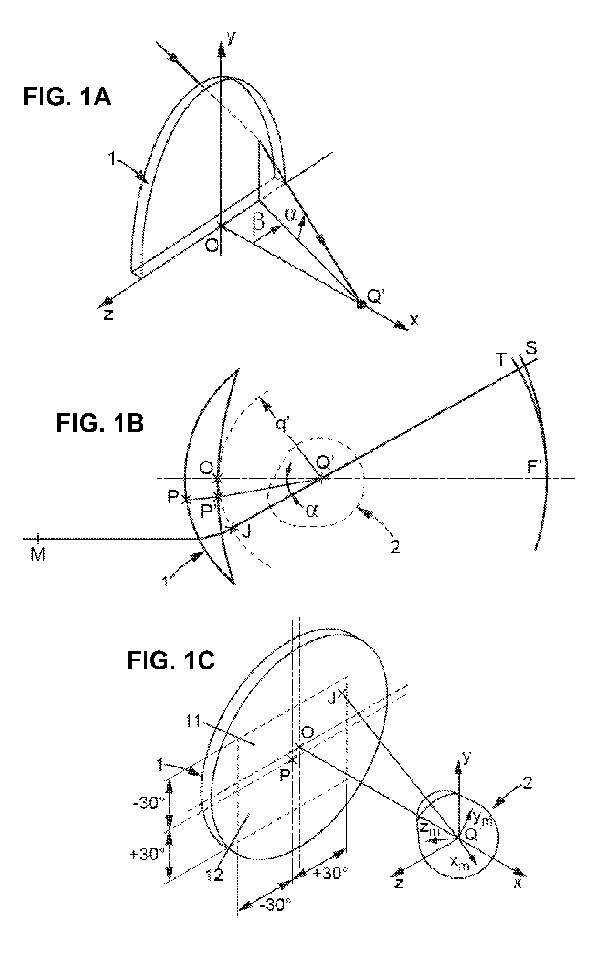

As well as defining the characteristics of lenses in terms of mean sphere or cylinder, the situation of the wearer of the spectacle lens can be taken into consideration. Figure 1A shows a schematic representation of a perspective view of an eye-lens arrangement illustrating the parameters $\alpha$ and $\beta$ for a gaze direction. Figure 1B shows a view in a vertical plane parallel to the anteroposterior axis of the head of the wearer and passing through the centre of rotation of the eye in the case where $\beta = 0$. Figure 1C shows a view in perspective in a configuration where $\alpha$ and $\beta$ are non zero enabling a fixed marker{ x, y, z} and a marker { $x_m$, $y_m$, $z_m$} relating to the eye to be highlighted in order to illustrate the rotation of the eye.

Q' is the centre of rotation of the eye, Q'F' is the horizontal axis passing through the centre of rotation of the eye and extending in front of the wearer - i.e. the axis Q'F' corresponds to the primary gaze direction. Point O is the point of intersection of the back surface of the lens and the axis Q'F'. A sphere of vertices centered on Q', of radius q', which is tangential to the back surface of the lens at a point of the horizontal axis, is defined. As an example, a common value for radius q' is 25,5mm.

A given gaze direction corresponds to a position of the eye rotating around Q' and to a point J on the sphere of vertices; the angle β is the angle formed between the axis Q'F' and the projection of the line Q'J onto the horizontal plane containing the axis Q'F', angle α is the angle between straight line Q'J and the projection of the line Q'J onto the horizontal plane containing the axis Q'F. A given gaze direction thus corresponds to a point J on the sphere of vertices or to a set of spherical coordinates (α, β). The image of a point of the object space in a gaze direction and at a given object distance is formed between two points S and T corresponding to the minimum and maximum focal distances. The image of a point in the object space at infinity forms at point F' of the optical axis.

These elements enable an optical power and an astigmatism to be defined in each gaze direction. For a given gaze direction (α, β) the object point M at a object distance given by the ergorama is considered. An ergorama is a function providing for each lens an association between each gaze direction and the usual distance to the object point towards which the gaze is directed. Typically in far vision following the direction of primary gaze, the object point is at infinity.

In the object space, for a point M on the corresponding light ray of a direction of gaze, the degree of nearness of an object, ProxO, is defined as being the inverse of the distance MJ between point M and point J on the sphere of vertices:

$$ProxO = 1/MJ$$

This makes it possible to calculate the degree of nearness of an object in the framework of a thin lens approximation at every point of the sphere of vertices, which is used for determining the ergorama. For an actual lens, it is possible, using a ray tracing program, to consider the degree of nearness of an object as being the inverse of the distance between the object point and the front surface of the lens, on the corresponding ray.

Still for the same direction of glance (alpha, beta), the image of the point M having a given degree of nearness is formed between two points S and T corresponding, respectively, to a minimum and maximum focal length (which would be the sagital and tangential focal length in the case of surfaces of revolution). The quantity: ProxI is called the degree of nearness of the image of point M:

$$ProxI = 0.5((1/JT) + (1/JS))$$

By analogy with the case of the thin lens, one thus defines, in a given gaze direction and for a given degree of nearness of an object, i.e. for a point in object space on the corresponding light ray, an optical power Pui, as being the sum of the degree of nearness of the image and the degree of nearness of an object:

$$Pui = ProxO + ProxI$$

Using the same notation, in each direction of glance and for a given the degree of nearness of an object, an astigmatism Ast. is defined as being:

$$Ast = \left| \frac{I}{JT} - \frac{1}{JS} \right|$$

This astigmatism *Ast* corresponds to the astigmatism of the light beam created by the aspherical front surface and the rear spherical surface. The angle of astigmatism commonly referred to as axe is the angle $\gamma$ measured in marker $(Q', x_m, y_m, z_m)$ related to the eye with respect to the direction $Z_m$ with the image S or T being formed as a function of the convention used in the plane $(Q', Z_m, y_m)$. The term resulting astigmatism refers to the difference between the prescribed astigmatism and the astigmatism generated by the glass

Thus, two possible definitions of optical power and astigmatism aberration of the lens are provided, under wearing conditions. These quantities may be readily calculated using a ray tracing program for a given lens. An example of such a ray tracing method is described in B.Bourdoncle et al, Ray tracing through progressive ophthalmic lenses, 1990 International Lens Design conference, proceedings SPIE 1354, Georges N Lawrence and D.T Moore ed. 1990 pp.194-199.

An ergorama is thereby defined which gives, for each direction of gaze, the degree of nearness of an object and a wearer power. The ergorama is defined for a given situation of the wearer, in other words for an ametropia-power addition pair and is thus a function that maps four variables: ametropia, power addition and direction of glance in the form of angles alpha and beta, to two values: the degree of nearness of an object and a wearer power.

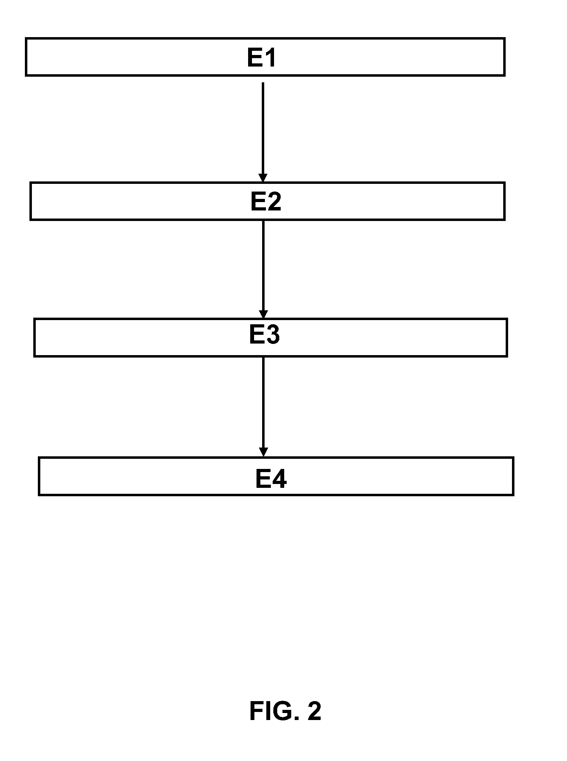

A first embodiment of the method according to the invention will now be described with reference to Figures 2 to 5B. In a preceding step of this example one or more reference surface $S_{ref}$, are pre-calculated, each reference surface $S_{ref}$ being defined by a plurality of surface points $P_i$ each surface point having a mean sphere Sph $(P_i)$ and a cylinder $Cyl(P_i)$. The reference surfaces $S_{ref}$ may be calculated according to known optimisation methods such as those hereinbefore described.

In step S1, the reference surface $S_{ref}$ to be modified is selected. A modifying surface layer $SL_{mod}$ is then determined in step S2 as a function of N adjustment parameters $\xi_1, \xi_2, \xi_3, \xi_4,..., \xi_N$; wherein N≥1. In this first embodiment the N adjustment parameters $\xi_1, \xi_2, \xi_3, \xi_4,..., \xi_N$ are selected in step S3 according respectively to N optical constraints imposed by the desired optical properties of the target optical surface. In this example the constraints to be imposed by the modifying surface layer $SL_{mod}$ include cancelling the cylinder value $Cyl(P_{FV})$ in the far vision region FV while preserving the cylinder value $Cyl(P_{NV})$ in the near vision region NV of the reference surface $S_{ref}$.

Fixing a cylinder value $Cyl(P_x)=0$ at a surface point can be seen as two constraints since this process is the equivalent of imposing that the curvatures are equal in all directions. If 3 curvatures taken in 3 non-aligned directions are equal, this ensures, by the Gauss equation, that all the curvatures of the surface are equal. If on the other hand a cylinder value $Cyl(P_i)$ at a surface point was fixed such that $Cyl(P_i) \neq 0$ this would constitute only one constraint. In this particular example there are therefore 4 constraints to respect: 2 constraints for the cylinder $Cyl(P_{FV})$ in the far vision region FV and 2 constraints for the cylinder $Cyl(P_{NV})$ in the near vision region NV. A modifying surface layer $SL_{mod}$ having 4 adjustable parameters is therefore used to respect the 4 constraints.

In order to simplify the problem, a modifying surface layer $SL_{mod}$ having a zero or negligible cylinder value Cyl $(P_{NV})$ in the near vision region NV, $Cyl(P_{NV}) \approx 0$, and being negligibly curved is imposed in order to assimilate the cylinder value $Cyl(P_{NV})$ in the near region of the target optical surface to that of the reference surface $S_{ref}$. Accordingly the problem is reduced to seeking two parameters enabling only the cylinder value $Cyl(P_{FV})$ in the far region to be made equal to zero.

Several modifying surface layers $SL_{mod}$ are possible. As an example the modifying surface layer $SL_{mod}$ may be determined according to a first surface S1 and a second surface S2 as a function of at least 2 adjustment parameters $\xi_1, \xi_2$ and given by the expression:

$$SL_{mod}\ (\xi_1,\ \xi_2,\ x,y) = \xi_1 S1(x,y) + \xi_2 S2(x,y) \qquad (3)$$

Or by the expression the cosine and sine functions can be used to define the orientation of the surface:

$$SL_{mod}\ (\xi_1,\ \xi_2,\ x,y) = \xi_1(S1(x,y)\cos(2\xi_2) + S2(x,y)\sin(2\xi_2)) \qquad (4)$$

wherein the surfaces S1 and S2 satisfy the following conditions:

- at least one surface point $P_{FV,s1}$ in a far vision region of the first surface S1 has a cylinder value $Cyl(P_{FV,s1}) > 0$, wherein the first cylinder has an axis Axe1FV,
- the least one surface point $P_{FV,S1}$ in the far vision region of the first surface S1 has a sphere value Sph $(P_{FV,S1})$ of approximately zero,
- at least one surface point $P_{NV,s1}$ in the near vision region of the first surface S1 has a first cylinder $Cyl(P_{NV,s1})$ of approximately zero;
- the at least one surface point $P_{NV,S1}$ in the near vision region of the first surface S1 has a sphere value Sph $(P_{NV,s1})$ of approximately zero,
- the first surface S1 is flatter than reference surface $S_{ref}$
- at least one surface point $P_{FV,s2}$ in the far vision region of the second surface S2 has a cylinder value $Cyl(P_{FV,s2})$, >0, wherein the second cylinder has an axis Axe2FV,
- the least one surface point $P_{FV,S2}$ in the far vision region of the second surface S2 has a sphere value Sph $(P_{FV,s2})$ of approximately zero,
- at least one surface point $P_{NV,s2}$ in the near vision region of the second surface S2 has a second cylinder value Cyl

($P_{NV,s2}$) of approximately zero;

- at least one surface point $P_{NV,s2}$ in the near vision region of the second surface S2 has a sphere value Sph ($P_{NV,s2}$) of approximately zero,
- the second surface S2 is flatter than reference surface $S_{ref}$

and wherein the angle $\alpha$ between axis of the first cylinder and the axis of the second cylinder is given by 0<$\alpha$<90°, and is preferably around 45°.

In order to translate the above criteria into a mathematical representation, a surface which minimises a certain functionel specification, for example, the flattest possible surface, may be sought. Surfaces S1 and S2 should be independent of the reference surface $S_{ref}$ so that they do not have to be recalculated for each new reference surface $S_{ref}$. Instead it should only be necessary to perform the calculation once and store the results in a database.

In step S4 the modifying surface layer $SL_{mod\,i}$s combined with the reference surface $S_{ref}$ according to the expression:

$$S_{tar}(x,y) = S_{ref}(x,y) + SL_{mod}\,(\xi_1,\,\xi_2,\,x,y) \tag{5}$$

to achieve the final target surface $S_{tar}$ such that on the target optical surface the cylinder value Cyl($P_{FV}$)=0 in the far vision region FV, while the cylinder value Cyl($P_{NV}$)in the near region is equal to that of the reference surface $S_{ref}$

In another example, the modifying surface layer $SL_{mod}$ may be determined according to a first surface S1 as a function of at least 2 adjustment parameters $\xi_1$, $\xi_2$ and given by the expression:

$$SL_{mod\,=}(\xi_1,\,\xi_2,\,x,y) = \xi_1 Rotation\_z(\xi_2,S1(x,y)) \tag{6}$$

wherein the first surface S1 has the same properties as defined previously and where Rotation_z($\xi_2$,S1(x,y)) is a rotation function representing the rotation of the first surface S1 about an axis z passing through a surface point (FC (fitting cross) , PRP (prism reference point) or NV (near vision control point), for example) of the plane (0x,y). This enables only a first surface S1 to be defined. The axis of the cylinder of S1 at the surface point should remain close to the axis of the cylinder of the reference surface $S_{ref}$ at the same point.

In the case where the cylinder at N points should be controlled, the method may be applied by considering the modifying surface layer $SL_{mod}$ as a sum of N distinct surface layers $SL_{mod1}$ + $SL_{mod2}$...+$SL_{modN}$

Considering, for example the case of 2 surface points. In this case the modifying surface layer $SL_{modN}$ to be considered can be broken down into two modifying surface layers $SL_{mod1}$ and $SL_{mod2}$ as a function of 4 adjustment parameters $\xi_1,\xi_2,\,\xi_3,\xi_4$ according to the expression:

$$SL_{mod}\,(\xi_1,\xi_2,\,\xi_3,\xi_4,x,y) = SL_{mod1}\,(\xi_1,\xi_2,x,y) + SL_{mod2}\,(\xi_3,\xi_4,x,y) \tag{7}$$

in which each consitutive surface modifying layer $SL_{mod1}$, $SL_{mod2}$ controls a cylinder Cyl($P_i$) of a respective control point ($P_i$) of the reference surface $S_{ref}$.

Each modifying surface layer $SL_{mod1}$ and/or $SM_{mod2}$can be broken down according to expressions (3) and (4) given above.

Surfaces S1 and S2 which make up the modifiying surface layer $SL_{mod1}$ and the surfaces S3 and S4 which make up the modifying surface layer $SL_{mod2}$, should be constructed in order to ensure certain properties at the point of control under consideration. The same surface properties as those presented above for surfaces S1 and S2 can be defined for S1 and S2 respectively , and for S3 and S4 respectively in this case.

In order to calculate the coefficients $\xi_1$, $\xi_2$, $\xi_3$, $\xi_4$ a system of 4 non-linear equations is resolved with 4 unknown variables.

Due to the constraints imposed by the four surfaces S1, S2, S3 and S4 ,the system of 4 equations can by a first approximation, in the case where the points $P_{FV}$ and $P_{NV}$ are not positioned too close to one another, and in the case where the cylinder values at these points of the reference surface are not too significant, be broken down into 2 systems of 2 equations and 2 unknowns. In other words it is possible to break down a buffering problem or more generally the control of cylinder values at two points into two buffering problems of 1 point as described above.

The surfaces S1 and S2 can after rotation about the z axis, translation and/or potential adaptation of the progression length or the inset, may be used as surface S3 and S4. i.e. the 2 surfaces S1 and S2 are sufficient to generate firstly the cylinder value $Cyl(P_{FV})$ in the far vision region FV and the cylinder value $Cyl(P_{NV})$ in the near vision region NV. The 2 surfaces S1 and S2 may also be used for other products in which the positions of the far vision FV and near vision NV control points are not identical.

A further solution would be to define a local optical function sometimes referred to as a merit function which takes into account a region around a point rather than just the point itself. In other words the resolution of a non-linear system of equations is replaced by a optimisation problem.

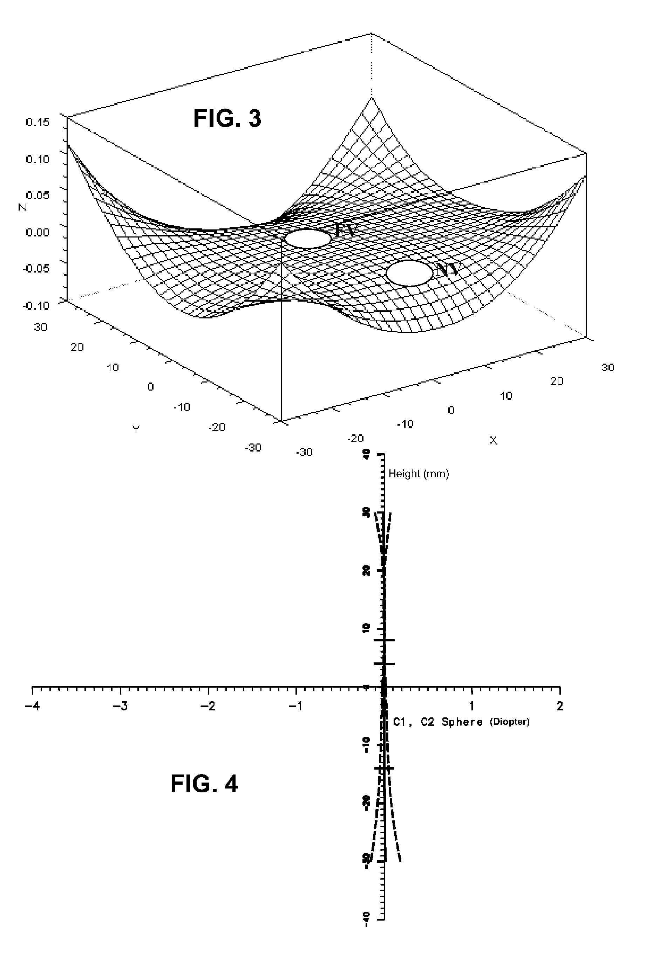

An example of the profile along the z direction of a surface such as S1 for setting the cylinder value $Cyl(P_{NV})$ =0 (e.g. in buffering) of the near vision NV control point is illustrated in Figure 3.

Figure 4 is a graph of the mean sphere value and cylinder value (difference between the two outer curves representing the principal minimum and maximum curvatures) along the meridien progression line of surface S1 for adjusting the cylinder value $Cyl(P_{NV})$ at the near vision control point according to an embodiment of the invention. This surface S1 was obtained with the aid of a surface optimisation software with equality constraints.

The surface S1 was calculated by minimising the merit function MF according to the expression:

$$MF = \int_{Disc} Sph(x, y)^2 \, dxdy \qquad (8)$$

It will be understood that alternative merit functions may be used, such as for example:

$$MF = \int_{Disc} Sph(x, y)^2 + Cyl(x, y)^2 \, dxdy \qquad (9)$$

The imposed contraints for this surface calculation being:

$$
\begin{aligned}
Cyl_{1NV} &= 0.1 \\
Axe_{1NV} &= 64.0 \\
Sph_{1NV} &= 0.0 \\
Cyl_{1FV} &= 0.0 \\
Sph_{1FV} &= 0.0
\end{aligned}
$$

In order not to have too high a cylinder value beyond the far vision region and to have zero height at (0,0) the following constraints have been added:

$$
\begin{aligned}
Cyl_{1vfv} &= 0.0 \\
Sph_{1vfv} &= 0.0 \\
S_1(0,0) &= 0.0
\end{aligned}
$$

It will be understood that further constraints can be added, for example in terms of the height in the direction z on the disk or the cylinder value on the same disk.

The surface sought is modelled by B-Spline curves of degree 5 of which the control points are spaced apart by 20mm. The optimised variables are the B-Spline coefficients.

The general idea is that the surfaces S1 and S2 are flat at the far vision region (FV) and little by little curve in the near vision region (NV) maintaining a sphere value $Sph(P_{NV})$ =0 at the near vision control point. The main curvatures are thus opposed at the near region point in order to obtain a zero sphere value at this point.

Around the near vision control point NV a curvature, according to the equation (6) in the direction θ with respect to the x-axis is given by:

$$Curve(S_{mod}, \theta) = \xi_1 cyl \, cos(2(\theta + \xi_2))/2 \qquad (10)$$

Modifying surface layer $S_{mod}(\xi_1, \xi_2, x, y)$ is therefore similar at the near region control point NV to the surface of a zero sphere, of cylinder $\xi_1$ cyl and of axis $\theta+\xi_2$, and remains flat at far vision control point NV. Parameters $\xi_1$, $\xi_2$ should then be adjusted in order to satisfy the condition $Cyl_{NV}=0$.

If the reference surface $S_{ref}$ has small cylinder values at the control points, the modifying surface layers which will be added to it will be limited and the surface design will thus only modified around the control points of the surface.

It should be noted that the modifying surface layers described herein may be applied to any surface design.

In a further embodiment of the invention, at the near vision NV and far vision FV control points, cylinder values can be fixed to be non-zero i.e $Cyl(P_{NV})\neq0$ and/or $Cyl(P_{FV})\neq0$ and cylinder axes can be fixed. In any case it is preferable that the reference surface $S_{ref}$ is not too distant from the desired constraints. The same decompositions according to expressions (3) and (4) and the same surfaces S1 to S4 as in the buffering case described above may be applied but with different constraints being imposed. These constraints may be the cylinder and its axis. It is preferable however for reasons of distinction to use two curves in 2 different directions (for example, orthogonal to one another) as constraints. These curves may be easily calculated from the sphere value Sph of the reference surface at the point under consideration, and from the desired cylinder Cyl and axis Axe.

In a further embodiment of the invention, the mean sphere value Sph at a surface point $(x_0, y_0)$ may be changed by a small amount $\Delta Sph$ without changing the general design of the surface. In this particular case a surface modifying layer $SL_{mod}$ based on only one paramter can be applied according to the expression:

$$S_{mod}(\xi_1, x,y) = \xi_1 S1(x,y) \qquad (11)$$

where surface S1 satisfies the following conditions :

- a small but non-zero sphere $Sph_1$ at $(x_0, y_0)$, for example, 0.05 diopters
- $Cyl_1=0$ at $(x_0, y_0)$

  $Cyl_{1FV}=0$ at the far vision control point
  $Sph_{1FV}=0$ at the far vision control point
  $Cyl_{1NV}=0$ at the near vision control point
  $Sph_{1NV}=0$ at the near vision control point
  S1 is flatter than $S_{ref}$

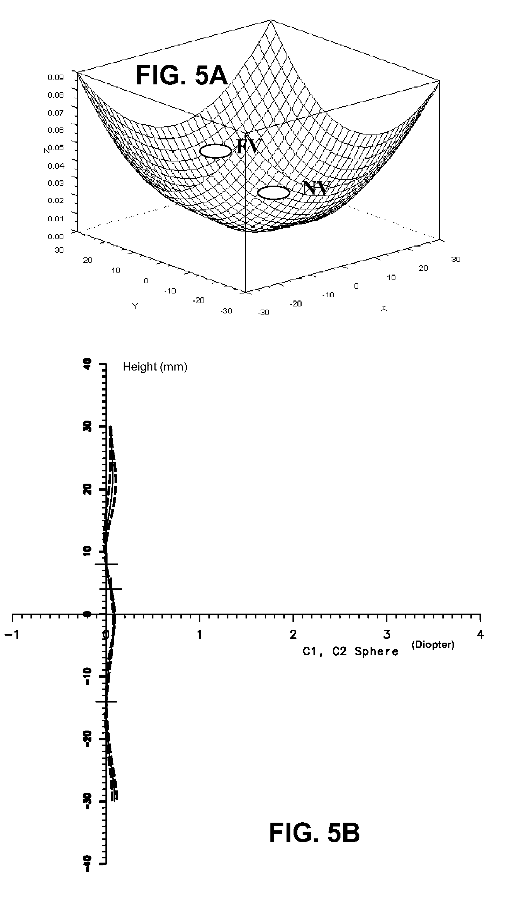

Figure 5A illustrates an example of a profile along the z axis of such a surface S1 where the point $(x_0, y_0)$ corresponds to the mounting center MC $(x_0=0, y_0=4)$. The variation of the mean sphere value Sph and cylinder value Cyl of surface S1 along the meridian progression line is shown in Figure 5B. The outer dashed curves represent the minimum and maximum curvatures.

The surface S1 can be obtained with the aid of the same surface optimisation software that was used to define the modifying layer for the buffering process.

Surface S1 in this embodiment is calculated by minimising the merit function FM according to the expression :

$$MF = \int_{Disc} Cyl(x, y)^2 dxdy \qquad (12)$$

It will be understood that other merit functions may be used as an alternative, for example :

$$MF = \int_{Disc} Sph(x, y)^2 + Cyl(x, y)^2 dxdy \qquad (13)$$

wherein the constraints imposed for this calculation are :

  $Cyl_{1NV} \qquad = 0.0$
  $Axe_{1NV} \qquad = 0.0$

(continued)

| | |
|---|---|
| $Sph_{1NV}$ | = 0.0 |
| $Cyl_{1FV}$ | = 0.0 |
| $Sph_{1FV}$ | = 0.0 |
| $Cyl_{1cm}$ | = 0.0 |
| $Shh_{1cm}$ | = 0.05 |

In order to obtain a zero height at (0,0), the following constraints can be added such as :

$$S_1(0,0) \quad = 0.0$$

It will be understood that the surface sought is modelled by B-Splines of degree 5 of which the control points are spaced apart by 10mm. The optimised variables are the B-spline coefficients.

If the coefficient $\xi_1$ remains small, the modifying surface layer $SL_{mod}$ to be added to the reference surface $S_{ref}$ is small and according to a first approximation the curvatures of the final surface $S_{tar}$ at the far vision FV and near vision NV points, and at surface points where the cylinder value Cyl is small can be written as:

$$Sph(x,y) = Sph_{ref}(x,y) + \xi_1 \, Sph_{S1}(x,y) + o(\xi_1) \qquad (14)$$

The value of coefficient $\xi_1$ can thus be immediately deduced from the constraint for the mean sphere value imposed at point (x,y). As a first approximation expression (14) may be used. Alternatively a more accurate calculation may be made by resolving the accurate non-linear equation conveying the constraint

$$Sph(x_0,y_0) = Sph_{S1}(x_0,y_0) + \Delta Sph \qquad (15)$$

It will be understood that the closer the reference surface $S_{ref}$ is to respecting the constraints imposed, the less perturbed the overall design will be by the process. It is thus preferable to apply the method for small changes of sphere values, cylinder values or other factors.

Adjusting coefficients $\xi_1, \xi_2, .., \xi_N$, to attain the desired constraints amounts to solving a system of N non-linear equations. In practice a large number of algorithms allow these equations to be numerically resolved. For example the Newton Raphson method may be employed.

In alternative embodiments of the invention a further solution would be to define a local optical function sometimes referred to as a merit function which takes into account a region around a point rather than just the point itself.

In an optical context, the principle is the same as in a surface context since the same types of surfaces may be used (for example a surface without any or with little variation in the mean sphere value, without any cylinder value in its upper part (in the area of far vision view) and with a variation in cylinder value in its lower part (in the area of near vision view)). Moreover the same type of systems of equations or optimisation problem resolutions can be used.

In this optical context the principle is applied not with the aim of cancelling a cylinder value at the location of at least one surface point but with the aim of cancelling at the location of at least one point a resulting astigmatism value without modifying the optical power of the lens.

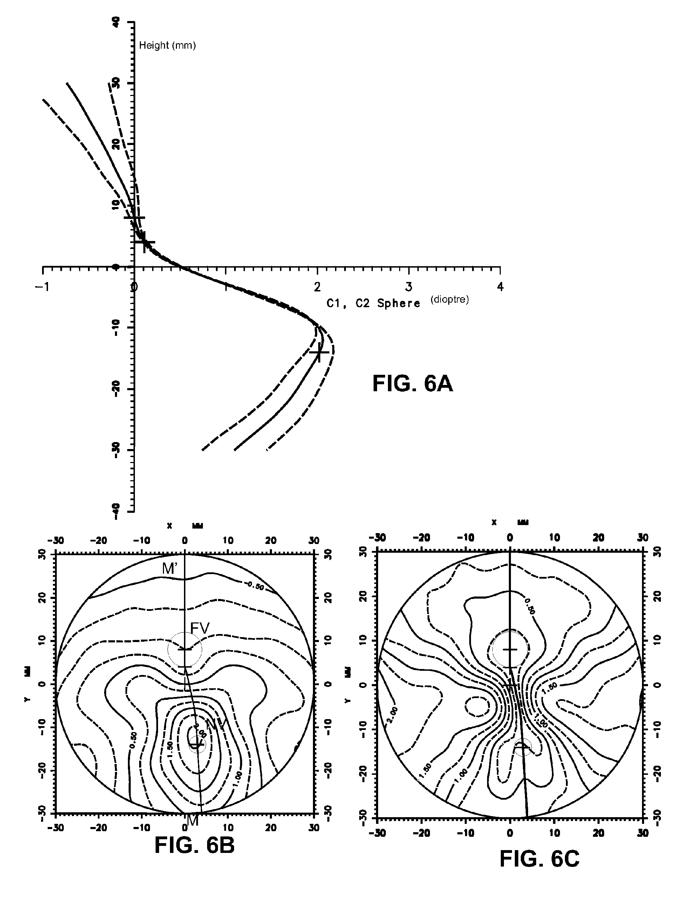

Figures 6A, B and C illustrate, respectively, a mean sphere profile (central line) and min and max sphere profiles (outer dashed lines) along the meridian progression line, a surface map of the mean sphere and a surface map of the cylinder value for a first reference surface $S_{ref1}$ before modification by a modifying surface layer $SL_{mod}$. In the surface maps 6B and 6C the meridian progression line MM' is shown as a solid line passing through the near vision control point NV and the far vision control point FV. In Figure 6B points on the surface of equal mean sphere value or power (measured in diopters) are joined by isosphere lines while in Figure 6C points on the surface of equal cylinder value (measured in diopters) are joined by isocylinder lines.

The first reference surface $S_{ref1}$ demonstrates significant cylinder values at the near vision and far vision points NV and FV.

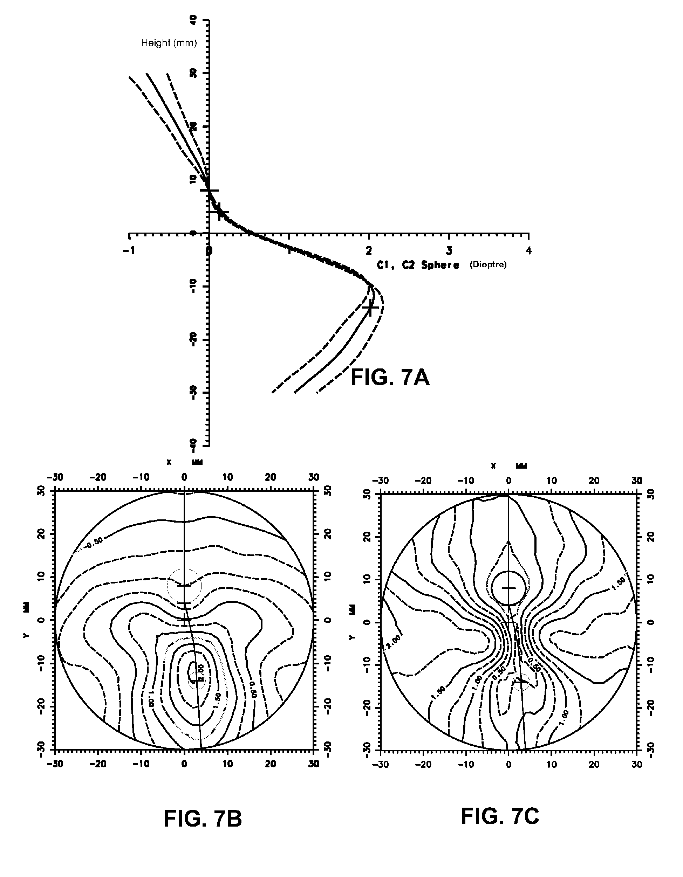

Figures 7A to 7C illustrate respectively a mean sphere profile (central line) along the meridian progression line and min and max sphere profiles (outer dashed lines), a surface map of the mean sphere and a surface map of the cylinder value for a first target surface $S_{tar1}$ after the first reference surface $S_{ref1}$ is buffered at the far vision point FV using the process of cylinder cancellation.

Accordingly, the infinitisemal far vision FV cylinder value is cancelled by modifying the cylinder value at the near vision point by only a value of 0.01 diopters and without modifying the mean sphere value at the two points FV and NV. Such a calculation can take less than a second on a standard PC.

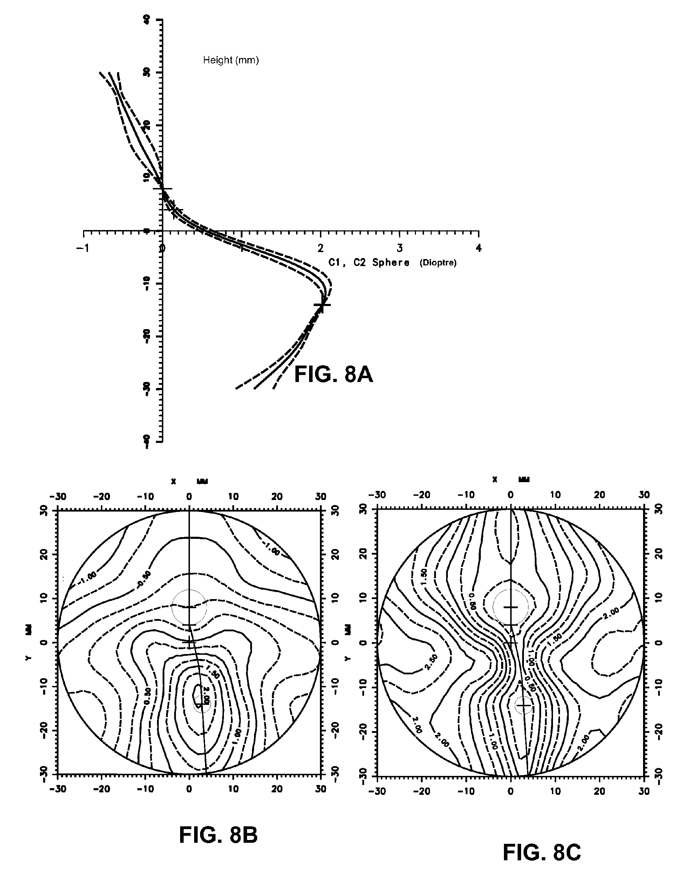

Figures 8A to 8C illustrate respectively a mean sphere profile (central line) along the meridian progression line and min and max sphere profiles (outer dashed lines), a surface map of the mean sphere and a surface map of the cylinder value for a second target surface $S_{tar2}$ after the surface of Figures 6A to 6C has been buffered at the far vision point FV and the near vision point NV using the process of cylinder cancellation at these points according to embodiments of the invention. In this way the NV and FV cylinders are cancelled.

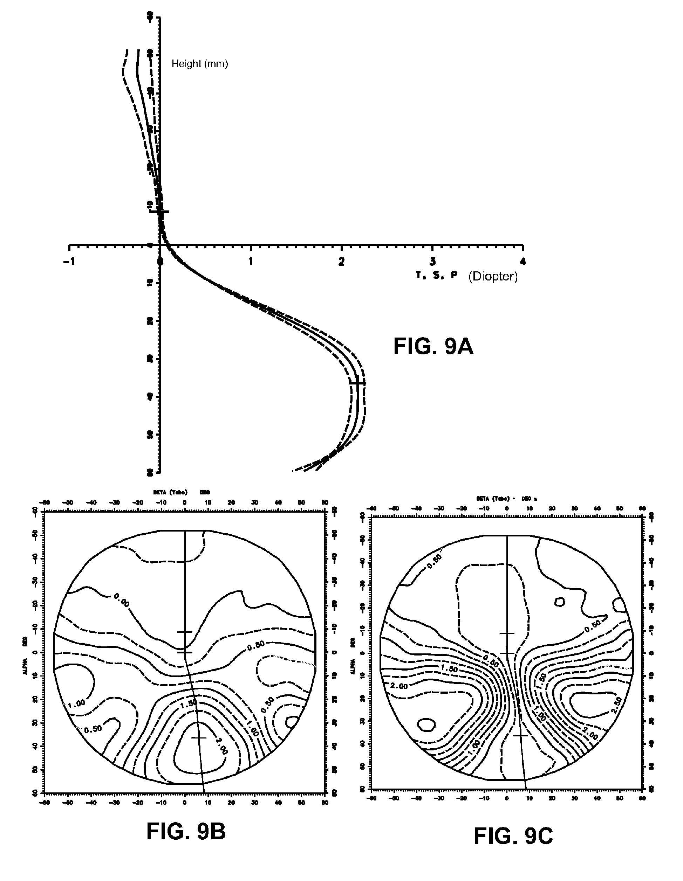

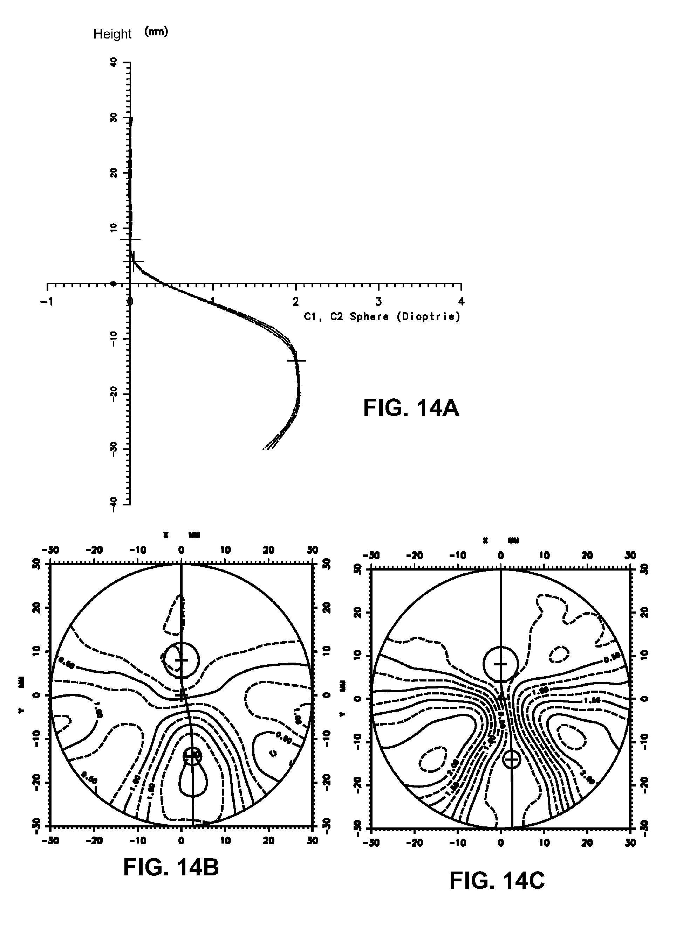

Figures 9A to 9C illustrate surface optical characteristics of a second reference surface $S_{ref2}$ for a prescription with plano addition 2 diopters in wearing conditions and with environmental standards (panto=-8°, galbe=0°, distance CRO-lens =25.5, reading distance = 40cm for a lowered view of 36°). The surface characteristics of a front face of the optical lens is illustrated in Figures 14A to 14C and has little cylinder along the meridian and virtually zero cylinder (0.02) at the NV point. Figure 9A is a graph of the mean power value and astigmatism value (difference between the two outer curves representing the sagittal and tangential powers) along the meridian progression line. Figure 9B and 9C are respectively a graph of the mean power and of the astigmatism for each gaze direction.

It can be noted that the near vision point has an astigmatism value of 0.15 diopters (the cylinder value = 0.02 diopters at the corresponding near vision point) and that there is a resultant astigmatism along the meridien line above the near vision point.

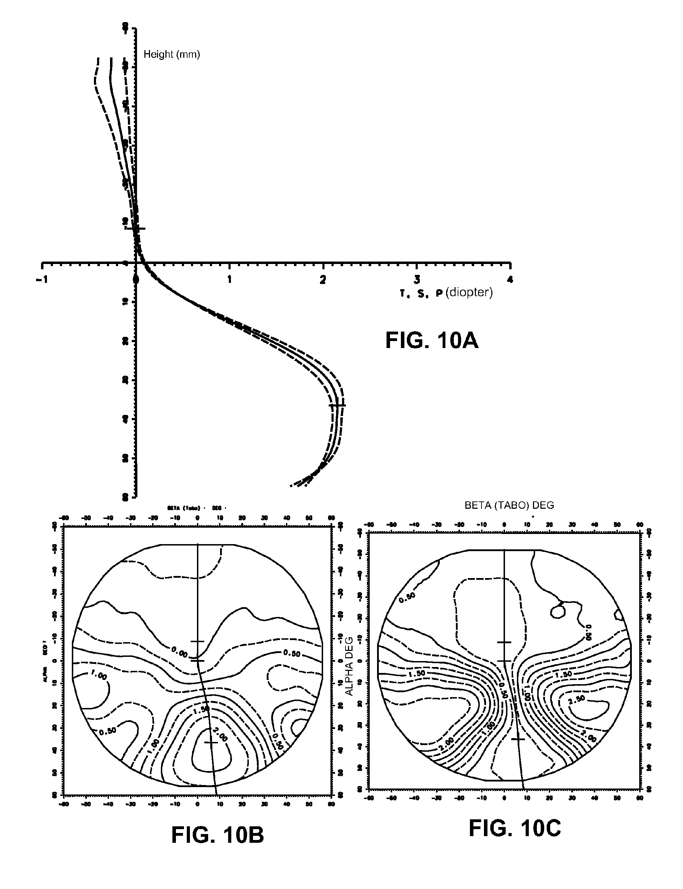

Figures 10A to 10C show the optical characteristics of the surface of Figures 9A to 9C which has undergone an aspherisation according to a prior art method such as described in EP1752812 for example. One method consists of defining the target optical function from a reference design from a so called Tscherning base.

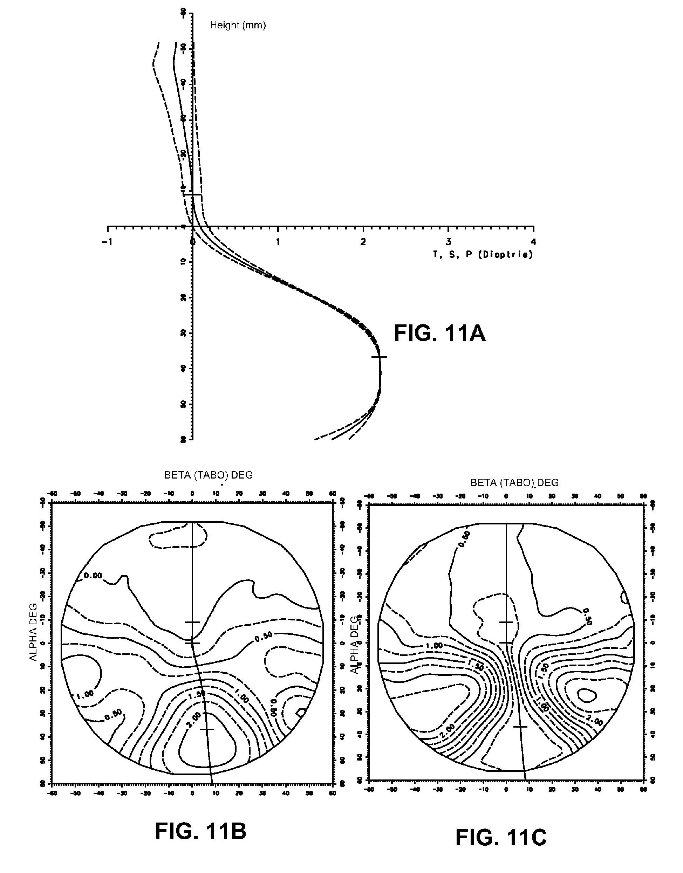

In order to cancel the astigmatism at the near vision point NV another method consists in adding a cylindrical surface layer to one of the sides of the lens. Figures 11A to 11C illustrate the optical analysis characteristics of the Figures 9A to 9C when a such a cylindrical surface has been calculated and added. The astigmatism value is zero at the near point NV but since the cylindrical surface layer has been calculated for the near vision point NV a deterioration of astigmatism can be observed in other viewing directions, in particular at the far vision point FV.

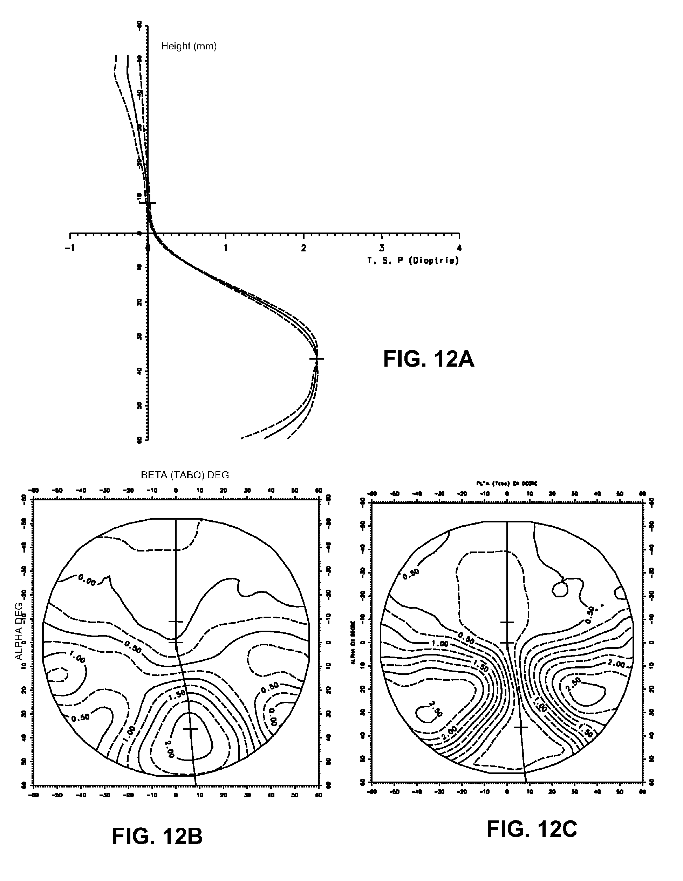

By virtue of the cylinder cancellation method using expression (6) above assoicated with the surface S1 presented in Figures 3 and 4 and presenting a variation in cylinder value in the lower part of the lens, the resultant astigmatism at near vision point NV can be cancelled. Figures 12A to 12C illustrate the optical characteristics of a third target surface $St_{ar3}$ corresponding to the reference surface $S_{ref2}$ of Figures 9A to 9C which has been "optically buffered". The resulting astigmatism at the near point NV is zero, the addition value being the same as the intial value (2.17 diopters) the resulting astigmatism along the meridian progression line above the near vision point NV has also been significantly reduced and the range of resulting astigmatisms at the near vision level have been significantly widened.

In a further application of the method of the invention starting from the surface characteristics of the first reference surface $S_{ref1}$ illustrated in Figure 6A to 6C the resulting astigmatism along the meridien progression line between the mounting centre MC and a lowered viewing angle of 40° can be minimised. In this case the same surface S1 as used to obtain target surface $S_{tar2}$ illustrated in Figures 8A to 8C can be used. In this case an optimisation problem to minimise the merit function as described above is resolved.

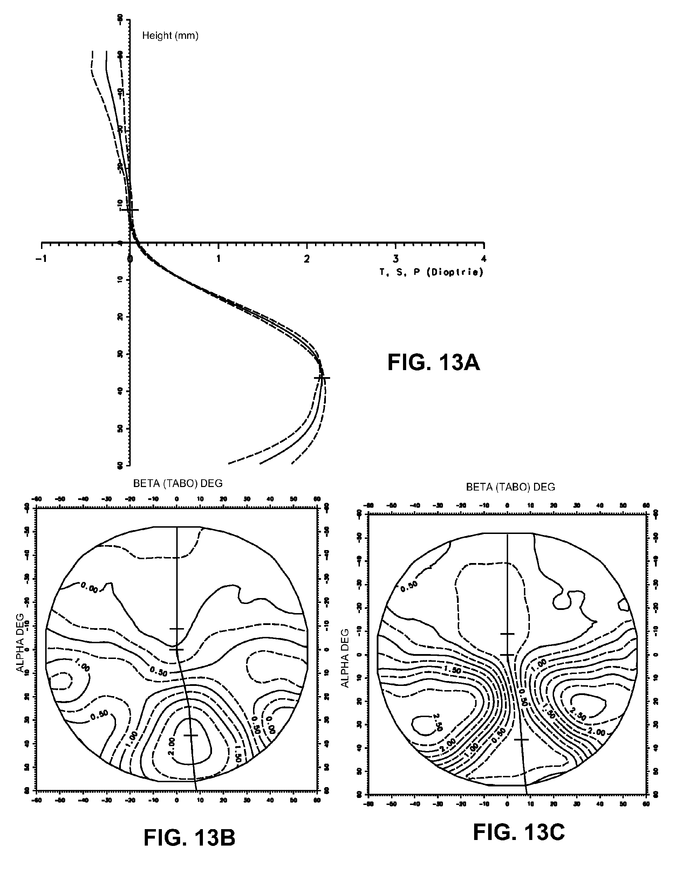

Figures 13A to 13C illustrate in the same conditions as for the surface of Figures 8A to 8C the optical characteristics of the seond reference surface $S_{ref2}$ of Figures 9A to 9C after optimisation of the astigmatism on the considered zone.

The method according to the invention can be used for modifying the surface characteristics of a surface, for example, the cylinder value at one or more points of a surface. The method is applicable for cylinders defined in an infinitesimal mode, i.e. a mode in which the curvatures are defined mathematically) or in the case where the cylinders are defined in pupil mode; i.e. in this mode the curvatures are defined starting from intergation on an eye pupil.

In practice the method according to the invention can be coupled to other methods of surface transformation in order to satisfy a range of geometrical constraints. For example:

- a declination method. Such a method enables the mean sphere of a surface at two distinct points to be changed without changing the global design of the surface. The method can be used to change the base and the addition of a progressive surface as described in EP1756651 for example. The method of the invention thus enables in addition to cylinder values, the values of the mean sphere to be fixed at two points which may be different to points where the cylinder values are fixed

- in combination with the method described in European patent application EP 08305250.6 the method of the invention enables the values of the progession length and the near vision inset NV to be fixed

- an adapted kinematics the method allows the normal to a surface point to be fixed

In addition the method can be applied at different stages of the manufacture of an optical lens:

- during design of the lens mould or the lens;
- during machining compensation;
- during the calculation of progressive lens with differential astigmatism at the near vision point NV and the far vision point FV
- during optimisation of the lens to the prescription which will be carried out in the prescription lab having machining technology such as digital surfacing.

Embodiments of the invention allow an optimisation method based on equality constraints using a significant number of variables (in some cases over 200) to be replaced by a simpler system of 2 resolvable non-linear equations based on 2 variables. The number of variables in the problem is reduced by selecting a design deformation that will allow the desired constraints to be achieved without departing too far from the original surface design around the surface control points.

The method according to embodiments of the invention allows a certain number of stages of an optimisation process which are subject to design deformations to be eliminated, such as surface extrapolation.

If the reference surface has insignificant cylinder values at the control points the modifying surface layers to be added will be insignificant and the surface design will only be modified a little around the control points.

It will be appreciated that the methods of the invention can be applied to the design of a digressive ophthalmic lens.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

**Claims**

1. A method of designing an optical lens surface, the method comprising the steps of
   providing a reference surface $S_{ref}$, the reference surface $S_{ref}$ being defined by a plurality of surface points $P_i$ each surface point $P_i$ having a mean sphere Sph $(P_i)$ and a cylinder Cyl$(P_i)$;
   providing at least one modifying surface layer $SL_{mod}(\xi_1, ...., \xi_N, x,y)$ the modifying surface layer $SL_{mod}$ being determined as a function of N adjustment parameters $\xi_1, \xi..., \xi_N$; wherein $N \geq 1$ and the N adjustment parameters $\xi_1, \xi_4,..., \xi_N$ are selected according to the desired optical properties of the optical target;
   combining the modifying surface layer $SL_{mod}$ with the reference surface $S_{ref}$ to obtain a target optical surface $S_{tar}$ (x,y) according to the expression:

$$S_{tar}(x,y) = S_{ref}(x,y) + SL_{mod}(\xi_1, ..., \xi_N, x,y);$$

   such that the value of a surface parameter of at least one surface point $P_i$ at a first region of the reference surface $S_{ref}$ is modified without modifying a surface parameter of at least one surface point $P_i$ at a second region of the reference surface $S_{ref}$, distanced from the first region.

2. A method according to claim 1, wherein the optical lens is a progressive or digressive optical lens and wherein the first region corresponds to one of a far vision zone and a near vision zone of the reference surface $S_{ref}$, and the second region corresponds to the other of the near vision zone and the far vision zone of the reference surface $S_{ref}$.

3. A method according to claim 1 or 2 wherein modifying the surface parameter includes modifying at least one of the mean sphere Sph $(P_i)$, the cylinder Cyl$(P_i)$, the cylinder axis Ax$(P_i)$, and the astigmatism value Ast$(P_i)$, at the at least one surface point $P_i$.

4. A method according to any one of the preceding claims, wherein the N adjustment parameters $\xi_1, ..., \xi_N$ are selected according respectively to N optical constraints imposed by the desired optical properties of the target optical surface $S_{tar}$.

5. A method according to any one of claims 1 to 3, wherein the N adjustment parameters $\xi_1, ..., \xi_N$ are selected to minimise a surface or optical merit function around a surface point $P_i$

6. A method according to any one of the preceding claims wherein the modifying surface layer $SL_{mod}$ is determined according to a first surface S1 and a second surface S2 as a function of at least 2 adjustment parameters $\xi_1$, $\xi_2$ and is given by the expression:

$$SL_{mod} (\xi_1, \xi_2, x,y) = \xi_1(S1(x,y)\cos(2\xi_2)+ S2(x,y)\sin(2\xi_2))$$

7. A method according to any one of claims 1 to 5 wherein the modifying surface layer $SL_{mod}$ is determined according to a first surface S1 as a function of at least 2 adjustment parameters $\xi_1$, $\xi_2$ and is given by the expression:

$$SL_{mod =}(\xi_1, \xi_2, x,y) = \xi_1 Rotation\_z(\xi_2,S1(x,y))$$

wherein $Rotation\_z(\xi_2,S1(x,y)$ is a rotation function representing the rotation of the first surface S1 about an axis z passing through a surface point of the plane (0x,y).

8. A method according to any one of claims 1 to 5, wherein the modifying surface layer $SL_{mod}$ is constituted of a plurality L of constitutive surface layers $SL_{mod1}....SL_{modL}$, where L>1 as a function of a plurality M of adjustment parameters $\xi_1,\xi_2,\xi_m..\xi_M$ and is given by the expression:

$$SL_{mod} (\xi_1..\xi_M,x,y) = SL_{mod1} (\xi_1,\xi_2,x,y) + SL_{modL} (\xi_m,\xi_M,x,y)$$

in which each constitutive surface layer $SL_{modl}$ controls at least one of a cylinder $Cyl(P_i)$, a mean sphere $Sph(P_i)$ an astigmatism value $Ast(P_i)$, of a surface point $(P_i)$ of the reference surface $S_{ref}$.

9. A method of manufacturing a surface of an optical lens comprising the steps of designing a target optical surface $S_{tar}(x,y)$ of the optical lens according to any one of claims 1 to 8, and further comprising the step of manufacturing the surface according to the target optical surface $S_{tar}(x,y)$.

10. A computer program product for a data-processing device, the computer program product comprising a set of instructions which, when loaded into the data-processing device, causes the device to perform the steps of the method as claimed in any of claims 1 to 9.

11. A computer-readable medium having computer-executable instructions to enable a computer system to perform the method of any one of claims 1 to 9.

**FIG. 1A**

**FIG. 1B**

**FIG. 1C**

```
┌─────────────────────────────────────────┐
│                   E1                      │
└─────────────────────────────────────────┘
                     │
                     ▼
┌─────────────────────────────────────────┐
│                   E2                      │
└─────────────────────────────────────────┘
                     │
                     ▼
┌─────────────────────────────────────────┐
│                   E3                      │
└─────────────────────────────────────────┘
                     │
                     ▼
┌─────────────────────────────────────────┐
│                   E4                      │
└─────────────────────────────────────────┘
```

FIG. 2

FIG. 3

FIG. 4

FIG. 5A

FIG. 5B

FIG. 6A

FIG. 6B

FIG. 6C

FIG. 7A

FIG. 7B

FIG. 7C

FIG. 8A

FIG. 8B

FIG. 8C

FIG. 9A

FIG. 9B

FIG. 9C

FIG. 10A

FIG. 10B

FIG. 10C

Height (mm)

FIG. 11A

BETA (TABO) DEG

ALPHA DEG

FIG. 11B

BETA (TABO) DEG

ALPHA DEG

FIG. 11C

FIG. 12A

BETA (TABO) DEG

FIG. 12B

FIG. 12C

**FIG. 13A**

**FIG. 13B**

**FIG. 13C**

Height (mm)

FIG. 14A

FIG. 14B

FIG. 14C

Europäisches
Patentamt

European
Patent Office

Office européen
des brevets

# EUROPEAN SEARCH REPORT

**Application Number**

EP 09 30 5632

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 676 610 A (BARKAN ERIC F [US] ET AL) 30 June 1987 (1987-06-30) * column 3, line 35 - column 5, line 2 * * column 11, line 25 - column 20, line 28; figures 1-8 * & EP 0 132 955 A (SOLA INT HOLDINGS [AU]) 13 February 1985 (1985-02-13) ----- | 1-11 | INV. G02C7/06 G02C7/02 |
| X | EP 0 295 849 A (SOLA INT HOLDINGS [AU]) 21 December 1988 (1988-12-21) * page 4, line 7 - page 11, line 7; figures 1-7; tables 1,2 * ----- | 1-11 | |
| X | EP 1 004 918 A (SEIKO EPSON CORP [JP]) 31 May 2000 (2000-05-31) * paragraph [0030] - paragraph [0076]; figures 1-8 * ----- | 1-11 | |
| X | WO 97/26579 A (SOLA INTERNATIONAL INC [US]) 24 July 1997 (1997-07-24) * page 2, line 11 - page 3, line 4 * * page 3, line 26 - page 4, line 19; figures 1-16 * ----- | 1-11 | TECHNICAL FIELDS SEARCHED (IPC) G02C |
| X | WO 00/72051 A (JOHNSON & JOHNSON VISION CARE [US]) 30 November 2000 (2000-11-30) * page 2, line 31 - page 6, line 31; figures 1-9 * ----- | 1-11 | |

The present search report has been drawn up for all claims

| Place of search | Date of completion of the search | Examiner |
|---|---|---|
| Munich | 11 December 2009 | Bratfisch, Knut |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 30 5632

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2009

| Patent document cited in search report | | Publication date | Patent family member(s) | | Publication date |
|---|---|---|---|---|---|
| US 4676610 | A | 30-06-1987 | AU | 565064 B2 | 03-09-1987 |
| | | | AU | 3051684 A | 24-01-1985 |
| | | | DE | 3485197 D1 | 28-11-1991 |
| | | | EP | 0132955 A2 | 13-02-1985 |
| | | | JP | 1794839 C | 28-10-1993 |
| | | | JP | 2038930 B | 03-09-1990 |
| | | | JP | 60048017 A | 15-03-1985 |
| EP 0132955 | A | 13-02-1985 | AU | 565064 B2 | 03-09-1987 |
| | | | AU | 3051684 A | 24-01-1985 |
| | | | DE | 3485197 D1 | 28-11-1991 |
| | | | JP | 1794839 C | 28-10-1993 |
| | | | JP | 2038930 B | 03-09-1990 |
| | | | JP | 60048017 A | 15-03-1985 |
| | | | US | 4676610 A | 30-06-1987 |
| EP 0295849 | A | 21-12-1988 | DE | 3854826 D1 | 08-02-1996 |
| | | | DE | 3854826 T2 | 22-08-1996 |
| | | | JP | 1063923 A | 09-03-1989 |
| | | | US | 4838675 A | 13-06-1989 |
| EP 1004918 | A | 31-05-2000 | WO | 9964919 A1 | 16-12-1999 |
| | | | US | 6220704 B1 | 24-04-2001 |
| WO 9726579 | A | 24-07-1997 | AU | 708706 B2 | 12-08-1999 |
| | | | AU | 1570797 A | 11-08-1997 |
| | | | DE | 69722076 D1 | 26-06-2003 |
| | | | DE | 69722076 T2 | 12-02-2004 |
| | | | EP | 0815485 A1 | 07-01-1998 |
| | | | US | 5726734 A | 10-03-1998 |
| WO 0072051 | A | 30-11-2000 | AU | 4692300 A | 12-12-2000 |
| | | | BR | 0011535 A | 14-05-2002 |
| | | | CA | 2370277 A1 | 30-11-2000 |
| | | | CN | 1364242 A | 14-08-2002 |
| | | | EP | 1188076 A2 | 20-03-2002 |
| | | | JP | 2003500685 T | 07-01-2003 |
| | | | MX | PA01012204 A | 30-06-2003 |
| | | | TW | 496980 B | 01-08-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1752812 A
- EP 1756651 A
- EP 08305250 A

**Non-patent literature cited in the description**

- SPIE 1354. 1990, 194-199